# EUROPEAN PATENT SPECIFICATION

(11) **EP 3 117 296 B1**
(45) Date of publication and mention of the grant of the patent: **22.04.2020**
(21) Application number: 15761820.8
(22) Date of filing: 11.03.2015
(51) Int. Cl.: G06F 21/83, G06F 21/31, G06F 21/62, H04W 12/06, H04W 12/02, G06F 3/048, G06F 3/16, G06F 3/01, G06F 3/023, G06F 3/0484, H04L 29/06, H04W 88/02

(54) **VISUALIZING RANDOM CHARACTERS FOR KEYBOARD-LESS DEVICES**
VISUALISIERUNG VON ZUFALLSZEICHEN FÜR TASTATURLOSE VORRICHTUNGEN
VISUALISATION DE CARACTÈRES ALÉATOIRES POUR DES DISPOSITIFS SANS CLAVIER

(30) Priority: 12.03.2014 US 201414207369
(43) Date of publication of application: 18.01.2017
(73) Proprietor: eBay, Inc., San Jose, CA 95125 (US)
(72) Inventor: POLYACHENKO, Maxim, 75725 Rishon LeZion (IL)
(74) Representative: Schwegman Lundberg Woessner Limited
(86) International application number: PCT/US2015/020017
(87) International publication number: WO 2015/138640

(56) References cited:
- US-A1- 2007 052 672
- US-A1- 2010 023 332
- US-A1- 2010 295 788
- US-A1- 2012 297 187
- US-A1- 2013 297 316
- US-A1- 2014 020 091
- US-B1- 8 520 848
- IAN JERMYN NEW YORK UNIVERSITY JERMYNGAMMAS NYU EDU ALAIN MAYER ET AL: "The Design and Analysis of Graphical Passwords", USENIX,, 30 April 2002 (2002-04-30), pages 1-15, XP061011215, [retrieved on 2002-04-30]

## Description

### TECHNICAL FIELD

Embodiments of the present disclosure relate generally to image processing, and more particularly, but not by way of limitation, to visualizing a set of random characters for providing voice input for private user information.

### BACKGROUND

Many wearable devices are keyboard-less devices. Wearable devices, such as Google Glass™ (developed by Google Inc. of Mountain View, California), do not have keyboards and may allow the user to use natural language spoken into a microphone and gestures on a touchpad to provide user input. In certain environments or situations, a user may want to provide identification information, including user name and password, to access an app running on the wearable device. Often, the user considers this information private and does not want to share this identification information with others, who may be close enough to a user to hear the user's voice input. As a result, users may be hesitant to provide voice input to a wearable device.

US2013/0297316 discloses a system and method of voice entry of sensitive information using one or more conversion rules to convert input voice into the sensitive information.

### SUMMARY

The present invention provides a computer implemented method and system for providing voice input for private user information as defined in the appended claims.

### BRIEF DESCRIPTION OF THE DRAWINGS

Various ones of the appended drawings merely illustrate example embodiments of the present disclosure and cannot be considered as limiting its scope.
**FIG. 1** is a block diagram of a networked system depicting an example embodiment.
**FIG. 2** is a block diagram depicting an example embodiment of a publication system.
**FIG. 3** is a block diagram illustrating an example embodiment of a random character visualization engine.
**FIG. 4** is a flow diagram for visualizing a set of random characters in accordance with an example embodiment.
**FIG. 5** is a flow diagram using voice input to provide private user information in accordance with an example embodiment.
**FIG. 6A** is a table mapping standard characters displayed to random characters displayed, and mapping random characters displayed to random characters spoken, according to an example embodiment.
**FIG. 6B** is an image of a keyboard displaying a standard set of characters and selected random characters, according to an example embodiment.
**FIG. 7** is an example embodiment of a computer system in conjunction with the present inventive subject matter.

### DETAILED DESCRIPTION

The description that follows includes systems, methods, techniques, instruction sequences, and computing machine program products that embody illustrative embodiments of the present invention. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures, and techniques have not been shown in detail.

As used herein, the term "or" may be construed in either an inclusive or exclusive sense. Additionally, although various example embodiments discussed below focus on a marketplace environment, the embodiments are given merely for clarity in disclosure. Thus, any type of electronic publication, electronic commerce, social networking, or electronic business system and method, including various system architectures, may employ various embodiments of the system and method described herein and may be considered as being within a scope of example embodiments. Each of a variety of example embodiments is discussed in detail below.

Example embodiments described herein provide systems and methods for visualizing a set of random characters and using voice input to provide private user information into a keyboard-less device. Private user information may include financial information, identification information, and other information that users would like to keep private. For example, a user located in a public location would like to use voice input to input data into a keyboard-less device in a private manner, even if the user's voice input is audible to others. In other words, the user may provide natural language voice input in which the content of the private user information is not recognizable by others even if they can hear what the user is saying. For example, a user may want to log into one of the user's online banking accounts or online payment accounts, such as a PayPal® account, by speaking characters which are randomly generated such that others who can hear the user cannot understand the content of the private user information.

For example embodiments, a user may request to communicate private user information by speaking random characters which are displayed on user's keyboard-less device, such as a wearable computing device like a Google Glass or a smart watch. In some embodiments, a set of random characters is generated, where at least one random character corresponds to a standard character from a set of standard characters. For an example embodiment, the set of standard characters represents characters on a computer keyboard, including letters, numbers or digits, signs, symbols, colors, special characters and/or images. The randomly generated characters and their corresponding standard characters are presented to the user on the user's keyboard-less device.

For one embodiment, an image of a keyboard having a set of standard characters, may be augmented with random characters, and displayed to the user on a wearable computing device, like a Google Glass. In alternative embodiments, the image of the random characters mapped to standard characters may not represent an augmented reality image. In further embodiments, the user may use natural language voice input by saying random characters, to log into an application (also referred to as an "app") accessible on the user's wearable computing device, or to input other private or sensitive information into apps accessible on the user's wearable computing device. In other embodiments, the user may use natural language voice input to navigate through the user's wearable computing device to perform various functions, commands, or actions. The standard characters corresponding to the random character voice input are recognized by the system and are used to log the user into the relevant app, perform other services or functions related to the relevant app on user's wearable computing device, or navigate through the user's wearable computing device. By saying randomly generated characters, instead of the true content characters (represented by the standard characters) the user prevents the user's private information (such as account information, username, password, sensitive information, etc.) from being recognized by others who hear the user speak into the user's wearable computing device. As such, the user of a wearable computing device who uses natural language voice input may keep his or her private information confidential when randomly generated characters are used. For alternative embodiments, voice input may be used alone or in conjunction with other forms of data input such as gestures (e.g., swiping motions on a touchpad).

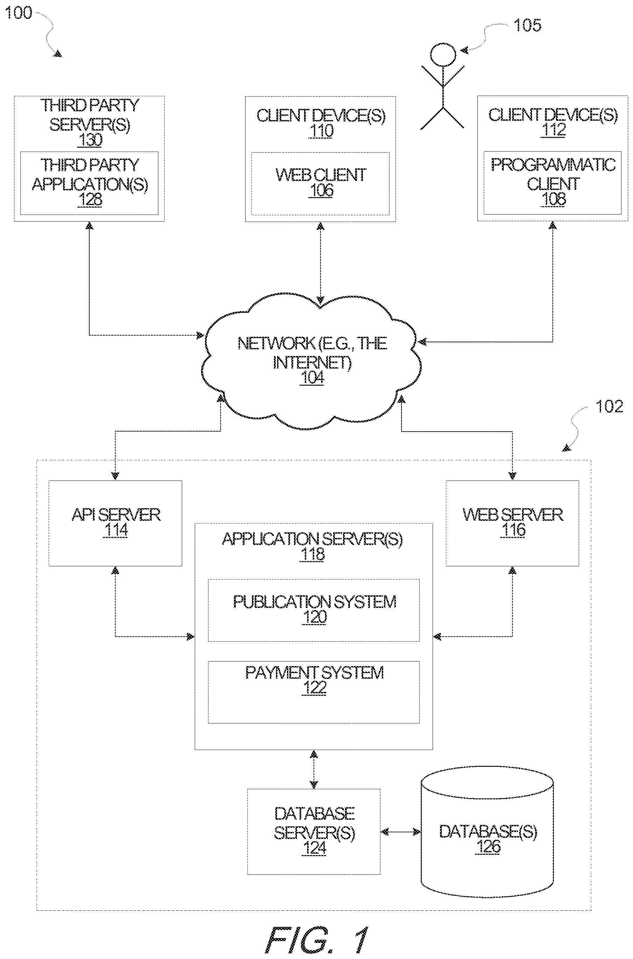

With reference to **FIG. 1****,** an example embodiment of a high-level client-server-based network architecture **100** to enable visualization of randomly generated characters on a keyboard-less device and to communicate private user information using the random characters through voice input is shown. A networked system **102,** in an example, provides network-server-side functionality, and is coupled via a communication network, (e.g., the Internet, wireless network, cellular network, or a Wide Area Network (WAN)) to one or more client devices **110** and **112.** **FIG. 1** illustrates, for example, a web client **106** operating via a browser (e.g., such as the INTERNET EXPLORER® browser developed by Microsoft® Corporation of Redmond, Washington State), and a programmatic client **108** executing on respective client devices **110** and **112.**

The client devices **110** and **112** may comprise a mobile phone, wearable computing device, desktop computer, laptop, or any other device that a user, such as user **105** may utilize to access the networked system **102.** In various embodiments, the client devices **110** and **112** may be wearable computing devices (e.g., Google Glass or a smart watch), that is, keyboard-less, or other types of similar devices. As used herein, a keyboard-less device refers to a device without a keyboard (either physical or virtual) that has physical keys or interactive surfaces that is used for inputting data by having a user push the keys or touch the relevant portion of an interactive screen to select characters. It should be noted that client devices **110** and **112** may be capable of displaying an image of a keyboard on a screen and may receive voice input to select the characters on the keyboard image. Such devices may be considered keyboard-less within the scope of the described embodiments. In some embodiments, the client device **110** may comprise or be connectable to an image capture device such as a camera or camcorder (not shown). In further embodiments, the client devices **110** and **112** may include one or more of a touchpad, touch screen, accelerometer, microphone, and GPS device. Various applications or apps may run on the client devices **110** and **112.** For example, one or more applications from a publication system **120** and a payment system **122** may be accessible to the user **105** by having a corresponding app run on the client devices **110** and **112.** Alternatively, the user **105** may access such applications from the client devices **110** and **112** through a web browser. The user **105** may want to log into such applications and apps using the client devices **110** and **112,** while keeping their identification information private. In example embodiments, the client devices **110** and **112** may be an individual user's device, such as user **105,** who is interested in communicating private information using natural language voice input by saying randomly generated characters, which hides the content of the voice input from others who may hear the user **105** speak.

For example embodiments, client devices **110** and **112** may be any type of keyboard-less device, such as a Google Glass or smart watch. For example, Google Glass includes a touchpad and microphone for receiving user input. Voice input, such as voice commands and natural language, may be received by a microphone. Voice recognition software and/or text recognition software may be used to process the voice input (representing audible random characters), received by client devices **110** and **112,** into text characters in accordance with various embodiments. The touchpad allows the user **105** to control the Google Glass using swiping motions (forward and backward) to navigate through a time-line like interface displayed on a screen.

The Google Glass may also include an optical head-mounted display (OHMD), which displays information in a hands-free format. The OHMD may provide a transparent screen to the user **105**, where all the information is displayed, including the randomly generated characters used to communicate private user information. Many apps are available for Google Glass, such as Gmail, Google maps, Google search, messaging, sharing to social networks (such as Facebook® and Twitter®), online payments, etc. Such apps may specify the user **105** to log into the app with a user name and password using voice input. Google Glass may communicate via Wi-Fi or via Bluetooth to share data connections with other devices. Google Glass may be able to access various services (GPS or SMS messaging) through a Bluetooth connection with an Android® device. A camera device is attached to the glass and has the ability to take photos and record videos. By having the camera attached to the Google Glass and the screen right on top of the user's vision, the user 105 may be provided with an augmented reality image. The augmented reality image may be an image of the user's mobile device keyboard, displayed on the screen, augmented with random characters that overlay the corresponding keyboard characters.

An Application Program Interface (API) server **114** and a web server **116** are coupled to, and provide programmatic and web interfaces respectively to, one or more application servers **118.** The application servers **118** may reside on server machines (not shown) that host the publication system **120** and the payment system **122,** each of which may comprise one or more modules, applications, or engines, and each of which may be embodied as hardware, software, firmware, or any combination thereof. The application servers **118** are, in turn, coupled to one or more database servers **124** facilitating access to one or more information storage repositories or databases **126.** The databases **126** may also store user account information of the networked system **102** in accordance with example embodiments.

The databases **126** may store data pertaining to various functions and aspects associated with the client-server-based network architecture **100** and its users. For example, user accounts for users of the networked system **102** may be stored and maintained in the databases **126.** Each user account may comprise user data that describes aspects of a particular user, such as the user **105.** The user data may include demographic data, user preferences, and financial information. The demographic data may, for example, include information describing one or more characteristics of user **105.** Demographic data may, for example, include gender, age, location information, employment history, education history, contact information, familial relations, or user interests. The financial information may, for example, include private financial information of the user **105** such as account number, credential, password, device identifier, user name, phone number, credit card information, bank information, transaction history or other financial information which may be used to facilitate online transactions by the user **105.** Consistent with some embodiments, the transaction history may include information related to transactions for goods or services (collectively referred to as "items" or "products") that may be offered for sale by merchants using marketplace services provided by the networked system **102.** The transaction history information may, for example, include a description of a product purchased by the user **105,** an identifier of the product, a category to which the product belongs, a purchase price, a quantity, or a number of bids. The databases **126** may also store image data for displaying a set of random characters and a set of standard characters that are presented to the user **105.**

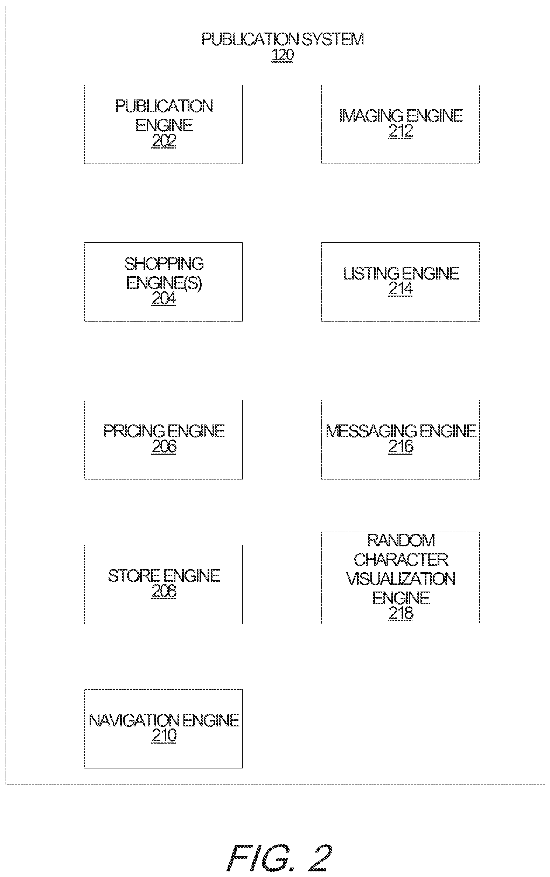

In example embodiments, the publication system **120** publishes content on a network (e.g., Internet). As such, the publication system **120** provides a number of publication functions and services to users that access the networked system **102.** The publication system **120** is discussed in more detail in connection with **FIG. 2****.** In example embodiments, the publication system **120** is discussed in terms of a marketplace environment. However, it is noted that the publication system **120** may be associated with a non-marketplace environment such as an informational or social networking environment. In various embodiments, the publication system 120 may include a random character visualization engine **218** for providing visualization of a set of random characters and using voice input to provide private user information to a keyboard-less device. For alternative embodiments, the random character visualization engine **218** (see **FIG. 2**) may be implemented using third party servers **130** and/or application servers **118.**

The payment system **122** provides a number of payment services and functions to users. The payment system **122** allows users to accumulate value (e.g., in a commercial currency, such as the U.S. dollar, or a proprietary currency, such as "points") in their accounts, and then later to redeem the accumulated value for products (e.g., goods or services) that are made available via the publication system **120** or elsewhere on the network **104.** The payment system **122** also facilitates payments from a payment mechanism (e.g., a bank account, PayPal™, or credit card) for purchases of items via any type and form of a network-based marketplace.

While the publication system **120** and the payment system **122** are shown in **FIG. 1** to both form part of the networked system **102,** it will be appreciated that, in alternative embodiments, the payment system **122** may form part of a payment service that is separate and distinct from the networked system **102.** Additionally, while the example network architecture **100** of **FIG. 1** employs a client-server architecture, a skilled artisan will recognize that the present disclosure is not limited to such architecture. The example network architecture **100** can equally well find application in, for example, a distributed or peer-to-peer architecture system, n-tier architecture, or virtualized cloud computing architecture. The publication system **120** and payment system **122** may also be implemented as standalone systems or standalone software programs operating under separate hardware platforms, which do not necessarily have networking capabilities.

Additionally, a third party application(s) **128,** executing on a third party server(s) **130**, is shown as having programmatic access to the networked system **102** via the programmatic interface provided by the API server **114.** For example, the third party application **128**, utilizing information retrieved from the networked system **102**, may support one or more features or functions on a website hosted by the third party. The third party website may, for example, provide one or more promotional, marketplace, or payment functions that are supported by the relevant applications of the networked system **102.**

Referring now to **FIG. 2**, an example block diagram illustrating multiple components that, in one embodiment, are provided within the publication system **120** of the networked system **102** is shown. In one embodiment, the publication system **120** is a marketplace system where items (e.g., goods or services) may be offered for sale. In an alternative embodiment, the publication system **120** is a social networking system or informational system. The publication system **120** may be hosted on dedicated or shared server machines (not shown) that are communicatively coupled to enable communications between the server machines. The multiple components themselves are communicatively coupled (e.g., via appropriate interfaces), either directly or indirectly, to each other and to various data sources, to allow information to be passed between the components or to allow the components to share and access common data. Furthermore, the components may access the one or more databases **126** via the one or more database servers **124.**

In one embodiment, the publication system **120** provides a number of publishing, listing, and price-setting mechanisms whereby a seller may list (or publish information concerning) goods or services for sale, a buyer can express interest in or indicate a desire to purchase such goods or services, and a price can be set for a transaction pertaining to the goods or services. To this end, the publication system **120** may comprise at least one publication engine **202** and one or more shopping engines **204.** In one embodiment, the shopping engines **204** may support auction-format listing and price setting mechanisms (e.g., English, Dutch, Chinese, Double, Reverse auctions, etc.).

A pricing engine **206** supports various price listing formats. One such format is a fixed-price listing format (e.g., the traditional classified advertisement-type listing or a catalog listing). Another format comprises a buyout-type listing. Buyout-type listings (e.g., the Buy-It-Now (BIN) technology developed by eBay Inc., of San Jose, California) may be offered in conjunction with auction-format listings and allow a buyer to purchase goods or services, which are also being offered for sale via an auction, for a fixed price that is typically higher than a starting price of an auction for an item.

A store engine **208** allows a seller to group listings within a "virtual" store, which may be branded and otherwise personalized by and for the seller. Such a virtual store may also offer promotions, incentives, and features that are specific and personalized to the seller. In one example, the seller may offer a plurality of items as Buy-It-Now items in the virtual store, offer a plurality of items for auction, or a combination of both.

Navigation of the publication system **120** may be facilitated by a navigation engine **210.** For example, a search module (not shown) of the navigation engine **210** enables, for example, keyword searches of listings or other information published via the publication system **120.** In a further example, a browse module (not shown) of the navigation engine **210** allows users to browse various category, catalog, or data structures according to which listings or other information may be classified within the publication system **120.** Various other navigation applications within the navigation engine **210** may be provided to supplement the searching and browsing applications. In one embodiment, the navigation engine **210** allows the user to search or browse for items in the publication system **120** (e.g., virtual stores, listings in a fixed-price or auction selling environment, listings in a social network or information system). In alternative embodiments, the navigation engine **210** may navigate (e.g., conduct a search on) a network at large (e.g., network **104**).

In order to make listings or posting of information available via the networked system **102** as visually informing and attractive as possible, the publication system **120** may include an imaging engine **212** that enables users to upload images for inclusion within listings and to incorporate images within viewed listings. The imaging engine **212** may work in conjunction with the random character visualization engine **218** to generate the augmented reality image, or other image, as will be discussed in more details below.

A listing engine **214** manages listings on the publication system **120.** In example embodiments, the listing engine **214** allows users to author listings of items. The listing may comprise an image of an item along with a description of the item. In one embodiment, the listings pertain to goods or services that a user (e.g., a seller) wishes to transact via the publication system **120.** As such, the listing may comprise an image of a good for sale and a description of the item such as, for example, dimensions, color, and, identifier (e.g., UPC code, ISBN code). In some embodiments, a user may create a listing that is an advertisement or other form of publication to the networked system **102.** The listing engine **214** also allows the users to manage such listings by providing various management features (e.g., auto-relisting, inventory level monitors, etc.).

A messaging engine **216** is responsible for the generation and delivery of messages to users of the networked system **102**. Such messages include, for example, advising users regarding the status of listings and best offers (e.g., providing an acceptance notice to a buyer who made a best offer to a seller) or providing recommendations. The messaging engine **216** may utilize any one of a number of message delivery networks and platforms to deliver messages to users. For example, the messaging engine **216** may deliver electronic mail (e-mail), an instant message (IM), a Short Message Service (SMS), text, facsimile, or voice (e.g., Voice over IP (VoIP)) messages via wired networks (e.g., the Internet), a Plain Old Telephone Service (POTS) network, or wireless networks (e.g., mobile, cellular, Wi-Fi, WiMAX).

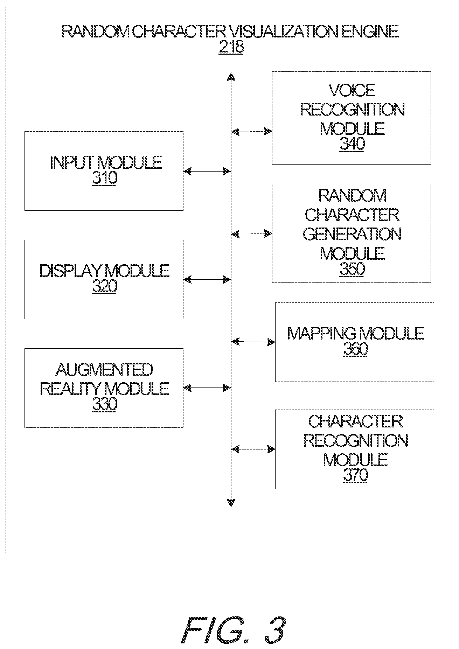

A random character visualization engine **218** manages the generation and display of randomly generated characters used to communicate private user information. The random character visualization engine **218** will be discussed in more detail in connection with **FIG. 3****.**

Although the various components of the publication system **120** have been defined in terms of a variety of individual modules and engines, a skilled artisan will recognize that many of the items can be combined or organized in other ways. Alternatively, not all components of the publication system **120** of **FIG. 2** may be utilized. Furthermore, not all components of the publication system **120** have been included in **FIG. 2****.** In general, components, protocols, structures, and techniques not directly related to functions of exemplary embodiments (e.g., dispute resolution engine, loyalty promotion engine, personalization engines, etc.) have not been shown or discussed in detail. The description given herein simply provides a variety of exemplary embodiments to aid the reader in an understanding of the systems and methods used herein.

**FIG. 3** is a block diagram illustrating an example embodiment of the random character visualization engine **218.** In an example embodiment, the random character visualization engine **218** comprises an input module **310,** a display module **320,** an augmented reality module **330,** a voice recognition module **340**, a random character generation module **350**, a mapping module **360**, and a character recognition module **370.** All of the modules may communicate with each other, for example, via a network coupling, shared memory, and the like. It will be appreciated that each module may be implemented as a single module, combined into other modules, or further subdivided into multiple modules. Other modules not pertinent to example embodiments may also be included, but are not shown. In alternative embodiments, one or more modules shown in the random character visualization engine **218** may not be used. For example, the augmented reality module **330** may not be included in some embodiments, where an image displayed does not use augmented reality.

In an example embodiment, the input module **310** may be configured to receive voice information or gesture information from the client devices **110** and **112.** The voice information may include voice actions or commands, such as "take a picture", "send a video", "send a message", or "get directions to." Voice commands such as "display random characters", "identification", "log into account" or "private" may be used to request private user information to be communicated using random characters. Additionally, the voice information may include random characters spoken by the user **105.** Private user information may include a variety of information types that the user **105** would like to keep private from other users, such as user names and passwords. For example, a user wearing a keyboard less wearable computing device, such as Google Glass, may be accessing applications such as PayPal. When logging into PayPal using Google Glass, rather than using voice input, to say the user name characters and password characters, a user may wish to say random characters that other third parties nearby, who may over-hear, would not recognize as the user name characters and password characters. In order to maintain the user's private user name and password as secret, random characters may be generated and displayed to the user in an augmented reality image or other image. The random characters spoken by the user may be received as input by random character visualization engine **218** through input module **310**. In other embodiments, the input module **310** may be configured to receive other forms of input information, such as gestures (e.g., swiping actions on a touchpad) that may be used to communicate private user information alone or in conjunction with the voice information.

In an example embodiment, the display module **320** may be configured to provide image data to display the augmented reality image or other image on the client device **110** or **112.** The image may be generated by the augmented reality module **330.** For an example embodiment, the augmented reality module **330** may be configured to augment the set of standard characters with the set of random characters to create an image. By augmenting the set of standard characters with a set of randomly generated characters, the user may use their voice to speak private user information without having other users understand or recognize the content of the spoken random characters.

A set of standard characters may include characters available from standard keyboard layouts or other input devices. The characters may include letters, numbers, digits, signs, symbols, colors, special characters and/or images. The special characters may include a variety of symbols generally available for data entry by keyboards. In alternative embodiments, the special characters may include various types of images that random character visualization engine **218** may recognize thru voice recognition as corresponding to a standard character.

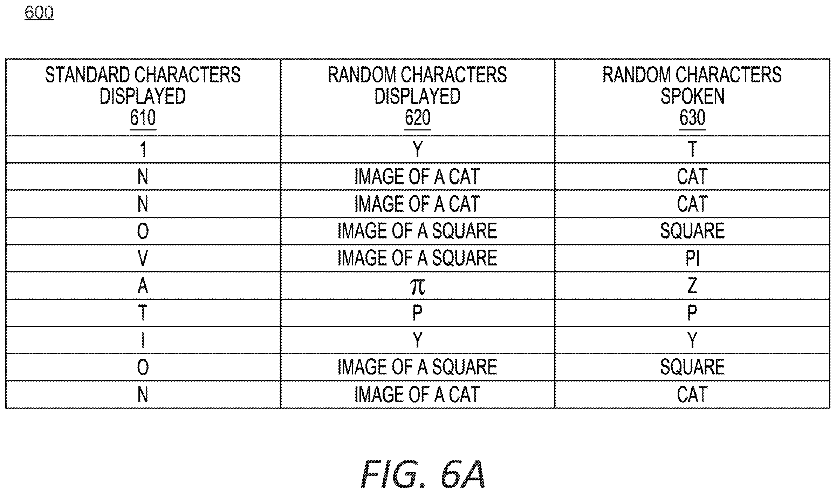

In an example embodiment, a user may have a password "INNOVATION" when spelled with standard characters. Table **600** shown in **FIG. 6A** illustrates the mapping for the standard characters displayed (shown in column **610**) to the random characters displayed (shown in column **620**) for the password "INNOVATION." Table **600** also shows, in column **630,** the characters spoken and received as voice input. The image may display to a user that the letter "I" corresponds to a random character "Y", the letter "N" may correspond to a random character illustrating a picture of a "CAT", the letter "O" may correspond to a random character of an image of a "SQUARE", the letter "V" may correspond to a random character "π", the letter "A" may correspond to a letter "Z", and the letter "T" may correspond to a letter "P". When the user provides voice input for the password of "INNOVATION", the user says the random characters "Y-CAT-CAT-SQUARE-π-Z-P-Y-SQUARE-CAT" as shown in column **630.** In alternative embodiments, more than one random character from the set of random characters may correspond to a single standard character from the set of standard characters. For one embodiment, the standard characters for the word "INNOVATION" represent a subset of words in a set of standard characters, and the random characters associated with the word "INNOVATION" represent a subset in a set of random characters.

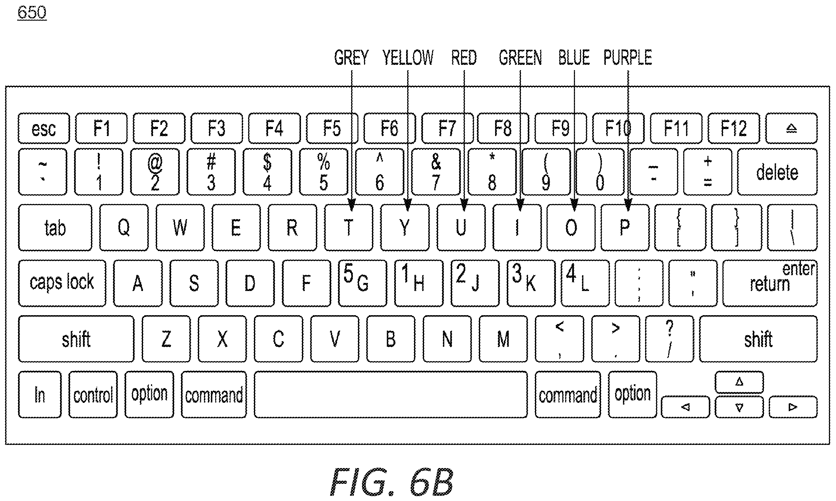

In another example embodiment, the image displayed may be an augmented image of a keyboard with random characters overlaying the standard characters on the keys of the keyboard. Referring now to **FIG. 6B****,** a keyboard **650** is displayed. The keyboard **650** illustrates a set of standard characters representing the characters displayed on common computer keyboard. In alternative embodiments, other types of keyboards or similar input devices may be used to display a set of standard characters. The standard characters "T" "Y" "U" "I" "O" "P" "G" "H" "J" "K" "L" on keyboard **650** and displayed on the keys of keyboard, are augmented with a variety of random characters. If a user's password is "HOTJOY", the user may provide the following voice input by saying "ONE-BLUE-GREY-TWO-BLUE-YELLOW" and the random character visualization engine **218** will recognize this random characters (represented by digits and colors in this example) and input (via text input) the password "HOTJOY" into the relevant password field of an app running on a client device. In various embodiments, the random characters displayed on keyboard 650 are only temporarily available to ensure a high security standard. The next time a user would like to use voice input to communicate the password "HOTJOY", the new random characters will be assigned to each character in the set of standard characters. For example, the letter "O" may get assigned a different color, than that displayed on keyboard **650.**

The random characters may be displayed in a variety of ways, for example, by replacing the standard characters on the keyboard, by displaying the random characters next to its corresponding standard character, or by displaying a color on the key of a standard character. In the example shown in FIG. **6B**, the random characters, represented by colors and digits may be replaced with images, pictures, symbols, letters or other characters in other alternative embodiments. Although only a portion of the standard characters displayed on the keys of keyboard **650** are augmented with random characters in this example, other embodiments may augment all keys, all relevant keys or some of the keys on keyboard **650** with random characters.

In an example embodiment, the random character generation module **350** is configured to generate a set of random characters in response to the request to communicate private user information, and at least one random character from the set of random characters corresponds to a character from a set of standard characters. For various embodiments, the set of random characters corresponding to the set of standard characters is available for either a limited period of time or a specified number of requests. For example, the set of random characters may available only for a single request to communicate private user information. For one embodiment, the single request to communicate private user information may be logging into PayPal or other application by providing user name and/or password. By providing limited availability of a particular set of random characters, it becomes more difficult for a person listening to the user speaking random characters to recognize or figure out the true content characters, as represented by the set of standard characters.

The mapping module **360** may be configured to associate the set of random characters with the set of standard characters. The mapping module **360,** the random character generation module **350,** and the augmented reality module **330**, may be used in various embodiments, to create the augmented reality image or other image, which is displayed to a user by display module **320.** In an example embodiment, voice recognition and/or text recognition technology may be incorporated into the mapping module 360 and the character recognition module **370.** The mapping module **360** may be configured to map spoken random characters to corresponding characters from the set of standard characters. An example mapping for the password "INNOVATION" is shown in Table **600 in** **FIG. 6A****.** The character recognition module **370** may be configured to recognize the private user information using the corresponding characters from the set of standard characters. Once the standard characters in the private user information is recognized, the private user information may be used for its intended purpose, for example entering a password to access an app. For some embodiments, the private user information, as recognized by the character recognition module **370,** may be provided to an application or app running or accessible on a client device (e.g., client devices **110** and **112**).

In an example embodiment, the input module **310** is configured to receive, from a client device, a request to communicate private user information using random characters. The random character generation module **350** is configured to generate a set of random characters in response to the request to communicate private user information using random characters, and at least one random character from the set of random characters corresponds to a character from a set of standard characters. The augmented reality module **330** may be configured to augment the set of standard characters with the set of random characters to create an image. The display module **320** may be configured to provide image data to the client device to display the image.

In yet a further embodiment, the mapping module **360** may be configured to associate, using at least one processor, the set of random characters with the set of standard characters. In yet another embodiment, a voice recognition module 340 may be configured to receive, from a user, a voice command, and to convert the voice command to the request to communicate private user information using random characters.

In further embodiments, the client device does not include a keyboard like input device for receiving user input via physical keys or virtual keys. In other embodiments, the image includes the set of random characters overlaying the set of standard characters. For example, the image may include an image of a keyboard with a set of standard characters that have a set of random characters superimposed on the set of standard characters. Alternatively, the image displayed to a user, may include the set of standard characters mapped to the set of random characters in a chart like format (without using any augmented reality technology), such as the Table **600** shown in **FIG. 6A****.**

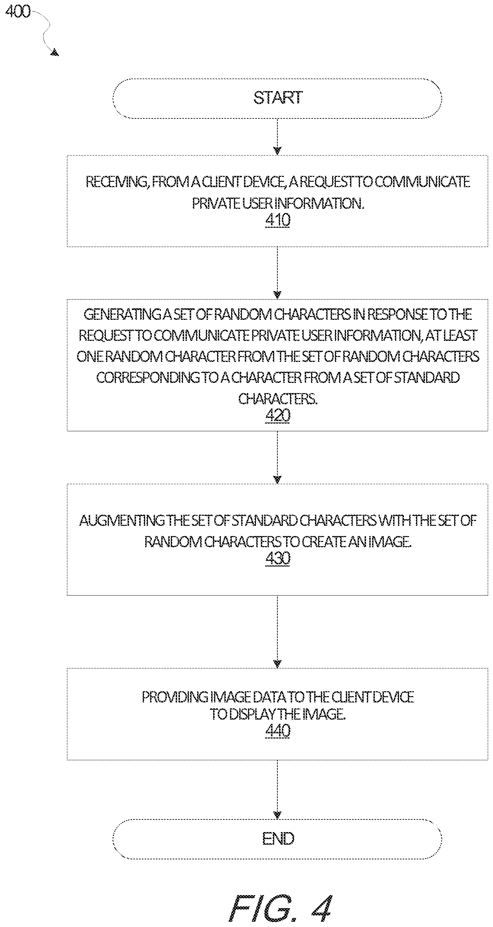

**FIG. 4** is a flow diagram for visualizing a set of random characters in accordance with an example embodiment. In one embodiment, the method comprises: at operation **410,** receiving, from a client device, a request to communicate private user information; at operation **420,** generating a set of random characters in response to the request to communicate private user information, at least one random character from the set of random characters corresponding to a character from a set of standard characters; at operation **430,** augmenting the set of standard characters with the set of random characters to create an image; and at operation **440,** providing image data to the client device to display the image. For example embodiments, flow diagram **400** may be implemented using one or more modules from the random character visualization engine **218.** For example, flow diagram **400** may be implemented using input module **310** at operation **410,** random character generation module **350** and/or mapping module **360** at operation **420,** augmented reality module **330** at operation **430,** and display module **320** at operation **440.**

For another embodiment, the image displays a mapping of the set of random characters to the set of standard characters. In yet another embodiment, the image displays the set of random characters overlaying the set of standard characters. In a further embodiment, augmenting the set of standard characters with the set of random characters to create an image further comprises overlaying the set of random characters over the set of standard characters displayed on a keyboard.

In other exemplary embodiments, receiving, from a client device, a request to communicate private user information, further comprises receiving, from a user, a voice action, and converting the voice action to the request to communicate private user information. In other embodiments, receiving, from a client device, a request to communicate private user information, further comprises receiving, from a user, a gesture command, and converting the gesture command to the request to communicate private user information.

In further embodiments, generating the set of random characters in response to the request to communicate private user information further comprises mapping the set of random characters to a set of standard characters. In other embodiments, generating the set of random characters in response to the request to communicate private user information, further comprises generating at least one random character corresponding to each one of the set of standard characters, the at least one random character representing one or more letters, digits or special symbols. In some embodiments, the set of standard characters represents characters available on a standard keyboard layout including one or more letters, digits or special symbols.

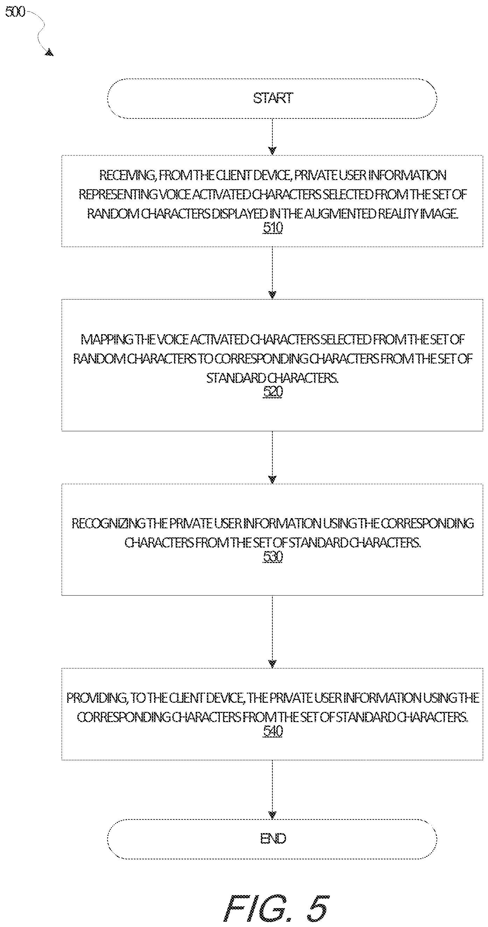

**FIG. 5** is a flow diagram of a method **500** using voice input to provide private user information in accordance with an example embodiment. In one embodiment, the method comprises: at operation **510,** receiving, from the client device, private user information representing spoken characters from the set of random characters displayed in an image; at operation **520,** mapping spoken characters from the set of random characters to corresponding characters from the set of standard characters; at operation **530,** recognizing the private user information using the corresponding characters from the set of standard characters; and at operation **540,** providing, to the client device, the private user information using the corresponding characters from the set of standard characters. In alternative embodiments, operation **540** may be optional. For example embodiments, flow diagram **500** may be implemented using one or more modules from the random character visualization engine **218.** For example, flow diagram **500** may be implemented using input module **310** at operation **510,** mapping module **360** at operation **520,** character recognition module 370 at operation **530,** and display module **320** at operation **540.**

The flow diagrams of methods **400** and **500** include several operations in the embodiments shown in **FIGS. 4** and **5****.** For alternative embodiments, one or more of the operations shown in the flow diagrams **400** and **500** may not be performed, and in yet further embodiments, additional operations (not shown in flow diagrams **400** and **500**) may be performed. In yet other embodiments, one or more of the operations may be combined into a single operation or subdivided into multiple operations. In other example embodiments, flow diagrams **400** and **500** may be combined to include one or more operations in the flow diagrams **400** and **500.** For example, one or more operations in flow diagrams **400** and **500** may be combined to perform the generation of random characters, the visualization of random characters, receiving the voice input of the random characters, and the mapping and recognition of the random characters.

### Modules, Components, and Logic

Additionally, certain embodiments described herein may be implemented as logic or a number of modules, engines, components, or mechanisms. A module, engine, logic, component, or mechanism (collectively referred to as a "module") may be a tangible unit capable of performing certain operations and configured or arranged in a certain manner. In certain example embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor, application specific integrated circuit (ASIC), or array) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in dedicated and permanently configured circuitry, or in temporarily configured circuitry (e.g., configured by software) may be driven by, for example, cost, time, energy-usage, and package size considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices and can operate on a resource (e.g., a collection of information).

### Example Machine Architecture and Machine-Readable Medium

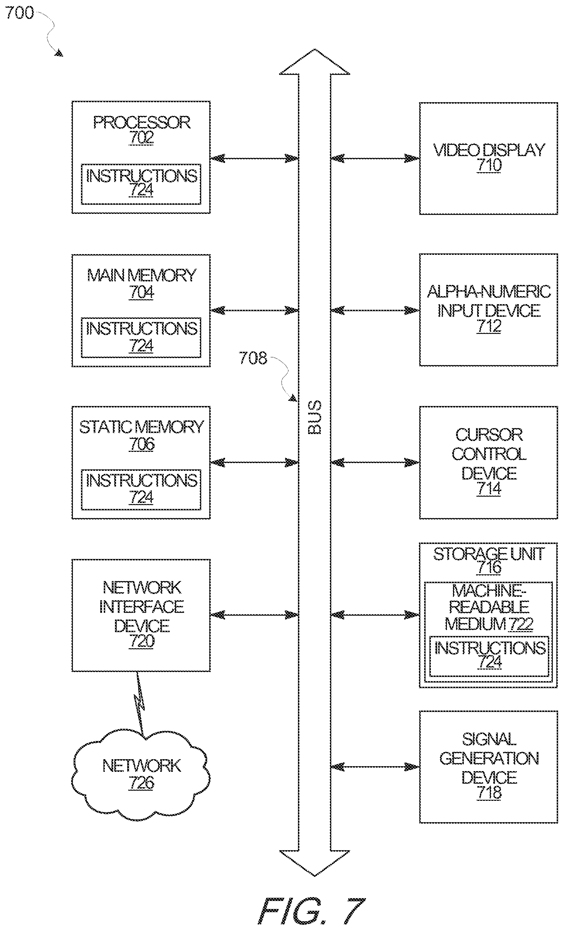

With reference to **FIG.** 7, an example embodiment extends to a machine in the example form of a computer system **700** within which instructions for causing the machine to perform any one or more of the methodologies discussed herein may be executed. In alternative example embodiments, the machine operates as a standalone device or may be connected (e.g., networked) to other machines. In a networked deployment, the machine may operate in the capacity of a server or a client machine in server-client network environment or n-tier network, as a peer machine in a peer-to-peer (or distributed) network environment or in a virtualized cloud computing environment. The machine may be a personal computer (PC), wearable computing device, a tablet PC, a set-top box (STB), a Personal Digital Assistant (PDA), a cellular telephone, a web appliance, a network router, a switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 may include a processor **702** (e.g., a central processing unit (CPU), a graphics processing unit (GPU) or both), a main memory 704 and a static memory **706,** which communicate with each other via a bus **708.** The computer system **700** may further include a video display unit **710** (e.g., a liquid crystal display (LCD) or a cathode ray tube (CRT)). In example embodiments, the computer system **700** also includes one or more of an alpha-numeric input device **712** (e.g., a keyboard), a user interface (UI) navigation device or cursor control device **714** (e.g., a mouse), a storage unit **716,** a signal generation device **718** (e.g., a speaker), and a network interface device **720.**

### Machine-Readable Storage Medium

The storage unit **716** includes a machine-readable storage medium 722 on which is stored one or more sets of instructions **724** and data structures (e.g., software instructions) embodying or used by any one or more of the methodologies or functions described herein. The instructions **724** may also reside, completely or at least partially, within the main memory **704** or within the processor **702** during execution thereof by the computer system **700,** with the main memory **704** and the processor **702** also constituting machine-readable media.

While the machine-readable storage medium **722** is shown in an example embodiment to be a single medium, the term "machine-readable storage medium" may include a single medium or multiple media (e.g., a centralized or distributed database, or associated caches and servers) that store the one or more instructions. The term "machine-readable medium" shall also be taken to include any tangible medium that is capable of storing, encoding, or carrying instructions for execution by the machine and that cause the machine to perform any one or more of the methodologies of embodiments of the present invention, or that is capable of storing, encoding, or carrying data structures used by or associated with such instructions. The term "machine-readable storage medium" shall accordingly be taken to include, but not be limited to, solid-state memories and optical and magnetic media. Specific examples of machine-readable storage media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and CD-ROM and DVD-ROM disks.

### Transmission Medium

The instructions **724** may further be transmitted or received over a communications network **726** using a transmission medium via the network interface device **720** and utilizing any one of a number of well-known transfer protocols (e.g., HTTP). Examples of communication networks include a local area network (LAN), a wide area network (WAN), the Internet, mobile telephone networks, POTS networks, and wireless data networks (e.g., Wi-Fi and WiMAX networks). The term "transmission medium" shall be taken to include any intangible medium that is capable of storing, encoding, or carrying instructions for execution by the machine, and includes digital or analog communications signals or other intangible medium to facilitate communication of such software.

Although an overview of the inventive subject matter has been described with reference to specific example embodiments, various modifications and changes may be made to these embodiments without departing from the broader scope of embodiments of the present invention. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present invention as represented by the appended claims. The specification and drawings are, accordingly, to be regarded in an illustrative rather than a restrictive sense.

## Claims

1. A computer implemented method of providing voice input for private user information, the method comprising:
receiving (410), from a client device (110, 112), a request to communicate private user information;
generating (420) a set of random characters in response to the request to communicate the private user information, at least one random character from the set of random characters corresponding to a character from a set of standard characters;
augmenting (430) the set of standard characters with the set of random characters to create an image of the standard characters augmented with the set of random characters;
providing image data to the client device (110, 112) to display the image of the standard characters augmented with the set of random characters;
receiving (510), from the client device (110, 112), private user information representing spoken characters from the set of random characters displayed in the image;
mapping (520) the spoken characters from the set of random characters to corresponding characters from the set of standard characters;
recognizing (530) the private user information using the corresponding characters from the set of standard characters; and
providing (540), to the client device (110, 112), the private user information using the corresponding characters from the set of standard characters.

2. The method of claim 1, wherein the image displays the set of random characters overlaying the set of standard characters.

3. The method of claim 1, wherein
the step of augmenting (430), further comprises overlaying the set of random characters over the set of standard characters on a keyboard image

4. The method of claim 1, wherein
receiving (410), from the client device (110, 112), the request to communicate the private user information, further comprises:
receiving, from a user, a voice action; and
converting the voice action to the request to communicate the private user information.

5. The method of claim 1, wherein generating (420) the set of random characters in response to the request to communicate the private user information, further comprises:
mapping the set of random characters to the set of standard characters.

6. The method of claim 1, wherein generating (420) the set of random characters in response to the request to communicate the private user information, further comprises:
generating at least one random character corresponding to each character in the set of standard characters, the at least one random character representing one or more letters, digits, colors, images or symbols.

7. The method of claim 6, wherein the set of standard characters represents characters available on a standard keyboard layout including one or more letters, digits, colors, images or symbols.

8. The method of claim 1, wherein the private user information represents password information or user account information for logging into an application accessible on the client device.

9. A system comprising:
at least one processor of a machine; and
a storage medium storing code executable by the at least one processor to implement:
an input module (310) configured to receive, from a client device (110, 112), a request to communicate private user information using random characters;
a random character generating module (350) configured to generate a set of random characters in response to the request to communicate the private user information using random characters, at least one random character from the set of random characters corresponding to a character from a set of standard characters;
an augmented reality module (330) configured to augment the set of standard characters with the set of random characters to create an image of the standard characters augmented with the set of random characters;
a display module (320) configured to provide image data to the client device (110, 112) to display the image of the standard characters augmented with the set of random characters;
wherein the input module (310) is configured to receive, from the client device (110, 112), private user information representing spoken characters from the set of random characters displayed in the image;
a mapping module (360) configured to map the spoken characters from the set of random characters to corresponding characters from the set of standard characters; and
a character recognition module (370) to recognize the private user information using the corresponding characters from the set of standard characters;
wherein the display module (320) is configured to provide, to the client device (110, 112), the private user information using the corresponding characters from the set of standard characters.

10. The system of claim 9, further comprising:
a voice recognition module (340) configured to
receive, from a user, a voice action; and
convert the voice action to the request to communicate the private user information using random characters.

11. The system of claim 9, wherein the client device (110, 112) does not include a keyboard like input device for receiving user input via physical keys.

12. The system of claim 9, wherein:
the image includes the set of random characters overlaying the set of standard characters.

13. The system of claim 9, wherein the private user information represents password information or user account information for logging into an application accessible on the client device.

14. A machine-readable medium carrying instructions, which when executed on a processor, cause the processor to perform the method of any one of claims 1 to 8.

## Patentansprüche

1. Computerimplementiertes Verfahren zum Bereitstellen von Spracheingabe für private Nutzerinformationen, wobei das Verfahren Folgendes umfasst:
Empfangen (410), von einer Client-Vorrichtung (110, 12), einer Anfrage zum Kommunizieren privater Nutzerinformationen;
Generieren (420) einer Reihe von zufälligen Zeichen als Reaktion auf die Anfrage zum Kommunizieren privater Nutzerinformationen, wobei mindestens ein zufälliges Zeichen aus der Reihe von zufälligen Zeichen, einem Zeichen aus einer Reihe von Standardzeichen entspricht;
Erweitern (430) der Reihe von Standardzeichen um die Reihe von zufälligen Zeichen zum Kreieren eines Bildes der Standardzeichen, das um die Reihe von zufälligen Zeichen erweitert ist;
Bereitstellen von Bilddaten für die Client-Vorrichtung (110, 112) zum Anzeigen des Bildes der Standardzeichen, die um die Reihe von zufälligen Zeichen erweitert ist;
Empfangen (510) von der Client-Vorrichtung (110, 112) von privaten Nutzerinformationen, die gesprochene Zeichen aus der Reihe von zufälligen Zeichen repräsentieren, die in dem Bild angezeigt werden;
Zuordnen (520) der gesprochenen Zeichen aus der Reihe von zufälligen Zeichen zu entsprechenden Zeichen aus der Reihe von Standardzeichen;
Erkennen (530) der privaten Nutzerinformationen unter Verwendung der entsprechenden Zeichen aus der Reihe von Standardzeichen; und
Bereitstellen (540) für die Client-Vorrichtung (110, 112) der privaten Nutzerinformationen unter Verwendung der entsprechenden Zeichen aus der Reihe von Standardzeichen.

2. Verfahren nach Anspruch 1, wobei das Bild die Reihe von zufälligen Zeichen anzeigt, die die Reihe von Standardzeichen überlagert.

3. Verfahren nach Anspruch 1, wobei
der Schritt des Erweiterns (430) weiter das Überlagern der Reihe von zufälligen Zeichen über die Reihe von Standardzeichen auf einem Tastaturbild umfasst.

4. Verfahren nach Anspruch 1, wobei
Empfangen (410) von der Client-Vorrichtung (110, 112) der Anfrage zum Kommunizieren der privaten Nutzerinformationen weiter Folgendes umfasst:
Empfangen von einem Nutzer einer Sprachaktion; und
Umwandeln der Sprachaktion in die Anfrage zum Kommunizieren der privaten Nutzerinformationen.

5. Verfahren nach Anspruch 1, wobei das Generieren (420) der Reihe von zufälligen Zeichen als Reaktion auf die Anfrage zum Kommunizieren der privaten Nutzerinformationen weiter Folgendes umfasst:
Zuordnen der Reihe von zufälligen Zeichen zu dem Satz von Standardzeichen.

6. Verfahren nach Anspruch 1, wobei das Generieren (420) der Reihe von zufälligen Zeichen als Reaktion auf die Anfrage zum Kommunizieren der privaten Nutzerinformationen weiter Folgendes umfasst:
Generieren mindestens eines zufälligen Zeichens entsprechend jedem Zeichen in der Reihe von Standardzeichen, wobei das mindestens eine zufällige Zeichen einen oder mehrere Buchstaben, Digits, Farben, Bilder oder Symbole repräsentiert.

7. Verfahren nach Anspruch 6, wobei die Reihe von Standardzeichen Zeichen repräsentiert, die auf einem Standard-Tastatur-Layout, das einen oder mehrere Buchstaben, Digits, Farben, Bilder oder Symbole beinhaltet, verfügbar sind.

8. Verfahren nach Anspruch 1, wobei die privaten Nutzerinformationen Passwortinformationen oder Nutzerkonteninformationen zum Anmelden in eine Applikation repräsentieren, auf die in der Client-Vorrichtung zugegriffen werden kann.

9. System, umfassend:
mindestens einen Prozessor einer Maschine; und
ein Speichermedium, das einen Code speichert, der durch mindestens einen Prozessor ausführbar ist, um Folgendes zu implementieren:
ein Eingabemodul (310), konfiguriert, um von einer Client-Vorrichtung (110, 112) eine Anfrage zum Kommunizieren privater Nutzerinformationen unter Verwendung von zufälligen Zeichen zu empfangen;
ein Generierungsmodul (350) zufälliger Zeichen, konfiguriert zum Generieren einer Reihe von zufälligen Zeichen als Reaktion auf die Anfrage zum Kommunizieren der privaten Nutzerinformationen unter Verwendung von zufälligen Zeichen, wobei mindestens ein zufälliges Zeichen aus der Reihe von zufälligen Zeichen einem Zeichen aus einer Reihe von Standardzeichen entspricht;
ein Modul für erweiterte Realität (330), konfiguriert zum Erweitern der Reihe von Standardzeichen um die Reihe von zufälligen Zeichen zum Kreieren eines Bildes der Standardzeichen, das um die Reihe von zufälligen Zeichen erweitert sind;
ein Anzeigemodul (320), konfiguriert, um Bilddaten für die Client-Vorrichtung (110, 112) zum Anzeigen des Bildes der Standardzeichen bereitzustellen, das um die Reihe von zufälligen Zeichen erweitert ist;
wobei das Eingabemodul (310) konfiguriert ist, um von der Client-Vorrichtung (110, 112) private Nutzerinformationen zu empfangen, die gesprochene Zeichen aus der Reihe von zufälligen Zeichen repräsentieren, die in dem Bild angezeigt werden;
ein Zuordnungsmodul (360), konfiguriert zum Zuordnen der gesprochenen Zeichen aus der Reihe von zufälligen Zeichen zu entsprechenden Zeichen aus der Reihe von Standardzeichen; und
ein Zeichenerkennungsmodul (370) zum Erkennen der privaten Nutzerinformationen unter Verwendung der entsprechenden Zeichen aus der Reihe von Standardzeichen;
wobei das Anzeigemodul (320) konfiguriert ist, um der Client-Vorrichtung (110, 112) die privaten Nutzerinformationen unter Verwendung der entsprechenden Zeichen aus der Reihe von Standardzeichen bereitzustellen.

10. System nach Anspruch 9, weiter Folgendes umfassend:
ein Spracherkennungsmodul (340), konfiguriert zum
Empfangen von einem Nutzer einer Sprachaktion; und
Umwandeln der Sprachaktion in die Anfrage zum Kommunizieren der privaten Nutzerinformationen unter Verwendung von zufälligen Zeichen.

11. System nach Anspruch 9, wobei die Client-Vorrichtung (110, 112) keine tastaturähnliche Eingabevorrichtung zum Empfangen einer Nutzereingabe über physikalische Tasten beinhaltet.

12. System nach Anspruch 9, wobei:
das Bild die Reihe von zufälligen Zeichen beinhaltet, die die Reihe von Standardzeichen überlagert.

13. System nach Anspruch 9, wobei die privaten Nutzerinformationen Passwortinformationen oder Nutzerkonteninformationen zum Anmelden in eine Applikation repräsentieren, auf die in der Client-Vorrichtung zugegriffen werden kann.

14. Maschinenlesbare Medienträgeranweisungen, die, wenn sie auf einem Prozessor ausgeführt werden, dafür sorgen, dass der Prozessor das Verfahren nach einem der Ansprüche 1 bis 8 ausführt.

## Revendications

1. Procédé implémenté par ordinateur de fourniture d'une entrée vocale d'informations d'utilisateur privées, le procédé comprenant :
la réception (410), en provenance d'un dispositif client (110, 112), d'une demande de communication d'informations d'utilisateur privées ;
la génération (420) d'un ensemble de caractères aléatoires en réponse à la demande de communication des informations d'utilisateur privées, au moins un caractère aléatoire de l'ensemble de caractères aléatoires correspondant à un caractère d'un ensemble de caractères types ;
l'augmentation (430) de l'ensemble de caractères types avec l'ensemble de caractères aléatoires pour créer une image des caractères types augmentés avec l'ensemble de caractères aléatoires ;
la fourniture de données d'image au dispositif client (110, 112) pour afficher l'image des caractères types augmentés avec l'ensemble de caractères aléatoires ;
la réception (510), en provenance du dispositif client (110, 112), d'informations d'utilisateur privées représentant des caractères parlés de l'ensemble de caractères aléatoires affichés dans l'image ;
le mappage (520) des caractères parlés de l'ensemble de caractères aléatoires à des caractères correspondants de l'ensemble de caractères types ;
la reconnaissance (530) des informations d'utilisateur privées à l'aide des caractères correspondants de l'ensemble de caractères types ; et
la fourniture (540), au dispositif client (110, 112), des informations d'utilisateur privées à l'aide des caractères correspondants de l'ensemble de caractères types.

2. Procédé selon la revendication 1, dans lequel l'image affiche l'ensemble de caractères aléatoires recouvrant l'ensemble de caractères types.

3. Procédé selon la revendication 1, dans lequel
l'étape d'augmentation (430) comprend en outre le recouvrement de l'ensemble de caractères aléatoires sur l'ensemble de caractères types sur une image de clavier.

4. Procédé selon la revendication 1, dans lequel
la réception (410), en provenance du dispositif client (110, 112), de la demande de communication des informations d'utilisateur privées, comprend en outre :
la réception, en provenance d'un utilisateur, d'une action vocale ; et
la conversion de l'action vocale en la demande de communication des informations d'utilisateur privées.

5. Procédé selon la revendication 1, dans lequel la génération (420) de l'ensemble de caractères aléatoires en réponse à la demande de communication des informations d'utilisateur privées, comprend en outre :
le mappage de l'ensemble de caractères aléatoires à l'ensemble de caractères types.

6. Procédé selon la revendication 1, dans lequel la génération (420) de l'ensemble de caractères aléatoires en réponse à la demande de communication des informations d'utilisateur privées, comprend en outre :
la génération d'au moins un caractère aléatoire correspondant à chaque caractère de l'ensemble de caractères types, l'au moins un caractère aléatoire représentant un ou plusieurs lettres, chiffres, couleurs, images ou symboles.

7. Procédé selon la revendication 6, dans lequel l'ensemble de caractères types représente des caractères disponibles sur une configuration de clavier type comportant un ou plusieurs lettres, chiffres, couleurs, images ou symboles.

8. Procédé selon la revendication 1, dans lequel les informations d'utilisateur privées représentent des informations de mot de passe ou des informations de compte d'utilisateur pour ouvrir une session avec une application accessible sur le dispositif client.

9. Système comprenant :
au moins un processeur d'une machine ; et
un support de stockage stockant un code exécutable par l'au moins un processeur pour implémenter :
un module d'entrée (310) configuré pour recevoir, en provenance d'un dispositif client (110, 112), une demande de communication d'informations d'utilisateur privées à l'aide de caractères aléatoires ;
un module de génération de caractères aléatoires (350) configuré pour générer un ensemble de caractères aléatoires en réponse à la demande de communication des informations d'utilisateur privées à l'aide de caractères aléatoires, au moins un caractère aléatoire de l'ensemble de caractères aléatoires correspondant à un caractère d'un ensemble de caractères types ;
un module de réalité augmentée (330) configuré pour augmenter l'ensemble de caractères types avec l'ensemble de caractères aléatoires pour créer une image des caractères types augmentés avec l'ensemble de caractères aléatoires ;
un module d'affichage (320) configuré pour fournir des données d'image au dispositif client (110, 112) pour afficher l'image des caractères types augmentés avec l'ensemble de caractères aléatoires ;
dans lequel le module d'entrée (310) est configuré pour recevoir, en provenance du dispositif client (110, 112), des informations d'utilisateur privées représentant des caractères parlés de l'ensemble de caractères aléatoires affichés dans l'image ;
un module de mappage (360) configuré pour mapper les caractères parlés de l'ensemble de caractères aléatoires à des caractères correspondants de l'ensemble de caractères types ; et
un module de reconnaissance de caractères (370) pour reconnaître les informations d'utilisateur privées à l'aide des caractères correspondants de l'ensemble de caractères types ;
dans lequel le module d'affichage (320) est configuré pour fournir, au dispositif client (110, 112), les informations d'utilisateur privées à l'aide des caractères correspondants de l'ensemble de caractères types.

10. Système selon la revendication 9, comprenant en outre :
un module de reconnaissance vocale (340) configuré pour
recevoir, en provenance d'un utilisateur, une action vocale ; et
convertir l'action vocale en la demande de communication des informations d'utilisateur privées à l'aide de caractères aléatoires.

11. Système selon la revendication 9, dans lequel le dispositif client (110, 112) ne comporte pas de dispositif d'entrée de type clavier pour recevoir une entrée d'utilisateur via des touches physiques.

12. Système selon la revendication 9, dans lequel :
l'image inclut l'ensemble de caractères aléatoires recouvrant l'ensemble de caractères types.

13. Système selon la revendication 9, dans lequel les informations d'utilisateur privées représentent des informations de mot de passe ou des informations de compte d'utilisateur pour ouvrir une session avec une application accessible sur le dispositif client.

14. Support lisible par machine comportant des instructions qui, lorsqu'elles sont exécutées sur un processeur, amènent le processeur à réaliser le procédé selon l'une quelconque des revendications 1 à 8.
